# EUROPÄISCHE PATENTSCHRIFT

(11) **EP 3 386 354 B1**
(45) Veröffentlichungstag und Bekanntmachung des Hinweises auf die Patenterteilung: **28.07.2021**
(21) Anmeldenummer: 16778856.1
(22) Anmeldetag: 11.10.2016
(51) Int. Cl.: A47J 31/44

(54) **KAFFEEMASCHINE UND VERFAHREN ZUM BETREIBEN EINER KAFFEEMASCHINE**
COFFEE MACHINE AND METHOD FOR OPERATING A COFFEE MACHINE
MACHINE À CAFÉ ET PROCÉDÉ DE FONCTIONNEMENT D'UNE MACHINE À CAFÉ

(30) Priorität: 11.12.2015 DE 102015121634
(43) Veröffentlichungstag der Anmeldung: 17.10.2018
(73) Patentinhaber: Melitta Europa GmbH & Co. KG, 32427 Minden (DE)
(72) Erfinder: SACHTLEBEN, Andreas, 32427 Minden (DE)
(74) Vertreter: Dantz, Jan Henning
(86) Internationale Anmeldenummer: PCT/EP2016/074319
(87) Internationale Veröffentlichungsnummer: WO 2017/097461

(56) Entgegenhaltungen:
- EP-A1- 0 616 785
- DE-U1- 29 711 421
- DE-U1-202014 104 028

## Beschreibung

Die vorliegende Erfindung betrifft eine Kaffeemaschine, mit einer Vorrichtung zur Zuführung von heißem Wasser zu einer Auslasseinrichtung oberhalb einem Filtergefäß, in das ein Filterpapiereinsatz mit Kaffeemehl einsetzbar ist, wobei die Auslasseinrichtung eine zentrale Auslassöffnung über einem mittleren Bereich des befüllten Filterpapiereinsatzes und mehrere äußere Auslassöffnungen, die oberhalb eines mittleren Bereiches der Seitenwände des befüllten Filterpapiereinsatzes angeordnet sind, aufweist, und die Durchflussmenge an heißem Wasser über die einzelnen Auslassöffnungen über einen Wahlschalter steuerbar ist, der mindestens drei Schaltstellungen zum Einstellen der Kaffeestärke aufweist, und ein Verfahren zum Betreiben einer solchen Kaffeemaschine.

Beim Brühen von Kaffee ist es bekannt, dass die Stärke und der Extraktionsgrad über eine "Coffee Brewing Control Chart" dargestellt werden können. Die meisten Verbraucher bevorzugen einen Extraktionsgrad zwischen 18 % bis 22 %. Allerdings gibt es auch Verbraucher, die einen milderen oder unterentwickelten oder stärken und bittereren Kaffee bevorzugen. In der US 8,495,950 B2 wird ein Verfahren zum Brühen von Kaffee offenbart, bei dem eine optimierte Berechnung des Brühvorganges erfolgt. Das Brühverfahren stützt sich auf die Erkenntnisse aus der Wechselwirkung betreffend den Extraktionsgrad (solubles yield) und die Kaffeestärke (solubles concentration).

Die EP 1 287 772 B1 offenbart eine Vorrichtung zur Herstellung eines Brühgetränks, bei der oberhalb eines Filtergefäßes eine Wasserzulaufeinrichtung mit einer Vielzahl von Durchlauföffnungen vorgesehen ist. Ein Teil der Durchlauföffnungen befindet sich auf einer elliptischen Umfangslinie, die etwa der Umfangskontur einer Projektionsfläche des Filtergefäß-Innenraumes in einem unteren bis mittleren Bereich des Filtergefäßes entspricht. Durch die Beschickung der zentralen Durchlauföffnung oder der äußeren Durchlauföffnungen kann die Kaffeestärke beim Brühen von Kaffee eingestellt werden. Allerdings lassen sich mit dieser Vorrichtung nur schlecht Zwischenstellungen einstellen, und es wäre für den Nutzer wünschenswert, eine Bedienhilfe zu bekommen, mit der die Kaffeestärke reproduzierbar eingestellt werden kann.

In der DE 20 2014 104 028 U1 ist eine Getränkemaschine offenbart, bei der an einem Zulauf ein Stellglied vorgesehen ist, das verschiedene Schaltstellungen einnehmen kann, um die Fluidverbindung von einem Flüssigkeitseinlass zu unterschiedlichen Auslassöffnungen herzustellen. In einer ersten Schaltstellung wird nur die zentrale Auslassöffnung mit Flüssigkeit versorgt. In einer weiteren Schaltstellung wird die Flüssigkeit zu zweiten Auslassöffnungen geleitet, die auf einer mittleren Kreisbahn um die zentrale Auslassöffnung angeordnet sind. In einer dritten Schaltstellung kann dann die Flüssigkeit zu Auslassöffnungen geleitet werden, die auf einer äußeren Kreisbahn um die zentrale Auslassöffnung angeordnet sind. Dadurch kann zwar die Kaffeestärke durch die verschiedenen Schaltstellungen eingestellt werden, allerdings ist der Aufbau des Flüssigkeitsverteilers komplex, und es sind eine Vielzahl von Auslassöffnungen vorhanden, die gewartet und gereinigt werden müssen. Zudem besteht der Nachteil, dass bei einer Schaltstellung für einen starken Kaffee nur die zentrale Auslassöffnung mit Flüssigkeit versorgt wird, so dass in dem äußere Bereich das Kaffeemehl nur wenig benetzt wird und das Kaffeegetränk eine höhere Bitterkeit aufweist. Auch bei einer mittleren Schaltstellung wird durch Zufuhr der Flüssigkeit über die Auslassöffnungen auf der mittleren Kreisbahn nur begrenzt eine gleichmäßige Benetzung des Kaffeemehls erreicht.

Es ist daher Aufgabe der vorliegenden Erfindung, eine Kaffeemaschine und ein Verfahren zum Betreiben einer Kaffeemaschine zu schaffen, die über eine Steuerung der Wasserzufuhr eine Kaffeestärke reproduzierbar eingestellt werden kann.

Diese Aufgabe wird mit einer Kaffeemaschine mit den Merkmalen des Anspruches 1 sowie mit einem Verfahren mit den Merkmalen des Anspruches 11 gelöst.

Bei der erfindungsgemäßen Kaffeemaschine umfasst eine Auslasseinrichtung eine zentrale Auslassöffnung über einem mittleren Bereich eines befüllten Filterpapiereinsatzes und mehrere äußere Auslassöffnungen, die vorzugsweise auf einer elliptischen oder ringförmigen Kreisbahn angeordnet sind, die oberhalb eines mittleren Bereiches der Seitenwände des befüllten Filterpapiereinsatzes angeordnet ist. Die Durchflussmenge an heißem Wasser über die einzelnen Auslassöffnungen kann dabei über einen Wahlschalter gesteuert werden, der mindestens drei Schaltstellungen zum Einstellen der Kaffeestärke aufweist. In allen Schaltstellungen des Wahlschalters wird das heiße Wasser zumindest teilweise über die äußeren Auslassöffnungen des befüllten Filterpapiereinsatzes zugeführt. Dadurch wird vermieden, dass bei einer Einstellung des Wahlschalters auf mittlere Brühstärke oder starke Brühstärke der Randbereich des Filterpapiereinsatzes mit Kaffeemehl nur schlecht durchströmt wird. Zudem wird durch die Zuführung von heißem Wasser über die äußeren Auslassöffnungen die Bitterkeit des Kaffeegetränks reduziert. Neben den Vorteilen für die Herstellung des Kaffeegetränkes führt dieser Aufbau auch zu dem Vorteil, dass eine geringere Anzahl an Auslassöffnungen bereitgestellt werden muss, so dass Wartung- und Reinigungsarbeiten reduziert werden.

In einer bevorzugten Ausgestaltung weist die Auslasseinrichtung Kanäle zum Leiten des heißen Wassers zu den Auslassöffnungen auf, und durch den Wahlschalter kann die Durchflussmenge zu den einzelnen Auslassöffnungen gesteuert werden. Abhängig von der Stellung des Wahlschalters kann dann die Durchflussmenge an heißem Wasser zu den äußeren Auslassöffnungen geringer oder größer ausfallen, je nach Stellung des Wahlschalters.

Wenn die Schaltstellung des Wahlschalters auf "stark" steht, werden vorzugsweise vorrangig die zentrale Auslassöffnung und in einem geringeren Maße die äußeren Auslassöffnungen durchströmt, beispielsweise in einem Verhältnis von 3:1 oder 4:1. Dadurch wird das Kaffeegetränk mit größerer Stärke hergestellt, da die Zuführung im mittleren Bereich für eine Verwirbelung des Kaffeemehls sorgt und eine vergleichsweise lange Kontaktzeit. Das Zuführen von Wasser in einem Randbereich sorgt für eine gleichmäßigere Benetzung und eine Reduzierung der Bitterkeit. Bei der Schaltstellung des Wahlschalters auf "stark" liegt bei einer mittleren Korngröße von 350 µm bis 450 µm des Kaffeemehls und einer Dosierung von 60 g Kaffeemehl pro Liter der Extraktionsgrad vorzugsweise bei über 22 %. Dadurch können Nutzer, die gerne starken und leicht bitteren Kaffee trinken, die Schaltstellung entsprechend wählen.

Bei einer mittleren Schaltstellung des Wahlschalters liegt der Extraktionsgrad vorzugsweise bei einer mittleren Korngröße zwischen 350 µm bis 450 µm und einer Dosierung von 60 g Kaffeemehl pro Liter in einem Bereich zwischen 18 % und 22 %. Dieser Bereich wird von der Mehrheit der Kaffeetrinker bevorzugt, da der Kaffee eine ausreichende Stärke und nur eine geringe Bitterkeit aufweist.

Für ein optimales Brühergebnis in der mittleren Schaltstellung wird das Kaffeemehl vorzugsweise besonders gleichmäßig durchströmt. Hierfür weist die Auslasseinrichtung oberhalb einer Bodennaht oder Bodenfalte des Filterpapiereinsatzes zusätzlich zu der zentralen Auslassöffnung mindestens zwei weitere mittige Auslassöffnungen auf, die in einem geringeren Abstand zur zentralen Auslassöffnung angeordnet sind als die äußeren Auslassöffnungen. Dadurch wird auch der Bereich zwischen den äußeren Auslassöffnungen und der mittleren Auslassöffnung gut durchströmt, wobei optional die zentrale Auslassöffnung bei Einsatz der mindestens zwei weiteren mittigen Auslassöffnungen abgesperrt werden kann. Vorzugsweise weist die Auslasseinrichtung neben der zentralen Auslassöffnung und den äußeren Auslassöffnungen nur zwei mittlere Auslassöffnungen auf, die auf gegenüberliegenden Seiten der zentralen Auslassöffnung vorgesehen sind.

Durch eine Schaltstellung des Wahlschalters auf "mild" kann über die Auslasseinrichtung erreicht werden, dass der Extraktionsgrad bei einer mittleren Korngröße des Kaffeemehls zwischen 350 µm bis 450 µm und einer Dosierung von 60 g Kaffeemehl pro Liter unter 18 % liegt, was Benutzern zugutekommt, die gerne milden Kaffee trinken. Dabei können in der entsprechenden Schaltstellung des Wahlschalters nur die äußeren Auslassöffnungen durchströmt werden, so dass die Kontaktzeit mit dem Kaffeemehl vergleichsweise kurz ist.

Bei dem erfindungsgemäßen Verfahren zum Betrieb einer erfindungsgemäßen Kaffeemaschine wird über Einstellung des Wahlschalters die Flüssigkeitszufuhr zu den einzelnen Auslassöffnungen gesteuert.

Die Erfindung wird nachfolgend anhand eines Ausführungsbeispiels mit Bezug auf die beigefügten Zeichnungen näher erläutert. Es zeigen:
- Figur 1: eine perspektivische Ansicht einer erfindungsgemäßen Kaffeemaschine;
- Figur 2: eine perspektivische Explosionsdarstellung der Kaffeemaschine der Figur 1;
- Figuren 3A bis 3D: mehrere Ansichten einer Auslasseinrichtung der Kaffeemaschine der Figur 1;
- Figuren 4A bis 4F: mehrere Ansichten der Auslasseinrichtung der Kaffeemaschine in der Einstellung "stark";
- Figuren 5A bis 5F: mehrere Ansichten der Auslasseinrichtung der Kaffeemaschine in der Einstellung "mittel";
- Figuren 6A bis 6F: mehrere Ansichten der Auslasseinrichtung der Kaffeemaschine in der Einstellung "mild", und
- Figur 7: eine grafische Ansicht der Kaffeestärke abhängig von der Einstellung des Wahlschalters der Kaffeemaschine.

Eine Kaffeemaschine 1 umfasst ein Gehäuse 2, an oder in dem ein Tank für Frischwasser und eine Heizeinrichtung vorgesehen sind. An dem Gehäuse 2 ist ein Filtergefäß 4 vorgesehen, in das ein kegelstumpfförmiger Filterpapiereinsatz einfügbar ist. Unterhalb des Filtergefäßes 4 ist eine Kanne 5 für frisch gebrühten Kaffee vorgesehen, die auf einer Warmhalteplatte 6 abgestellt ist.

An der Oberseite des Gehäuses 2 befindet sich ein abnehmbarer Deckel 3, an dem eine Öffnung 8 für einen Wahlschalter 9 vorgesehen ist. Durch Drehen des Wahlschalters 9 kann die Kaffeestärke des gebrühten Kaffees eingestellt werden.

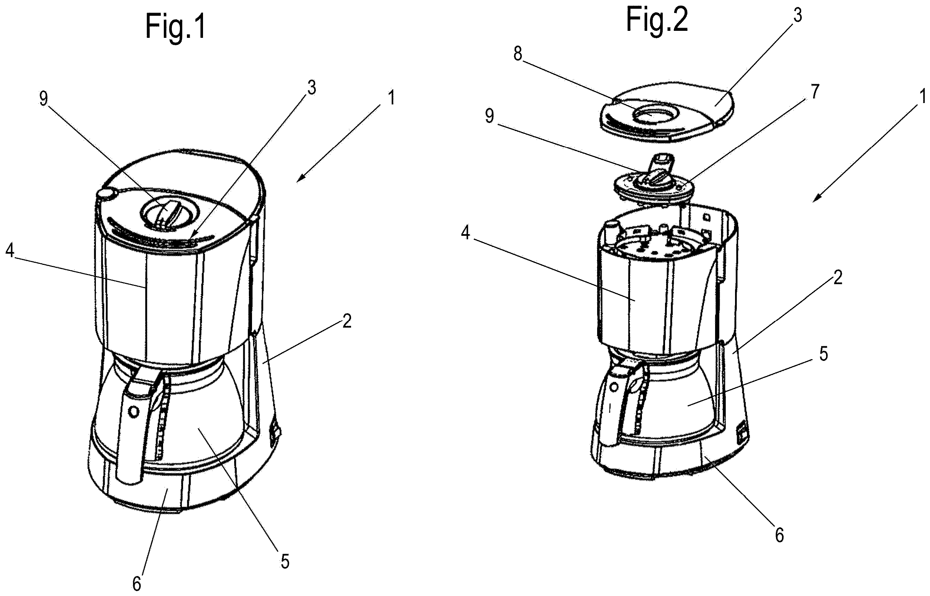

Entsprechend der Ansicht der Figur 2 ist unterhalb des Deckels 3 eine Auslasseinrichtung 7 für heißes Wasser vorgesehen, die über den Wahlschalter 9 gesteuert werden kann.

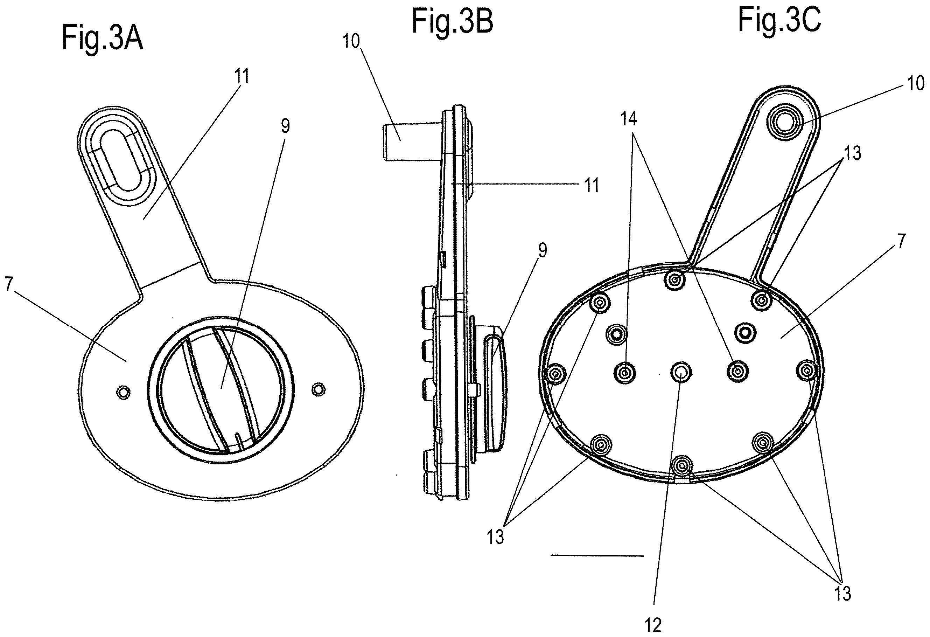

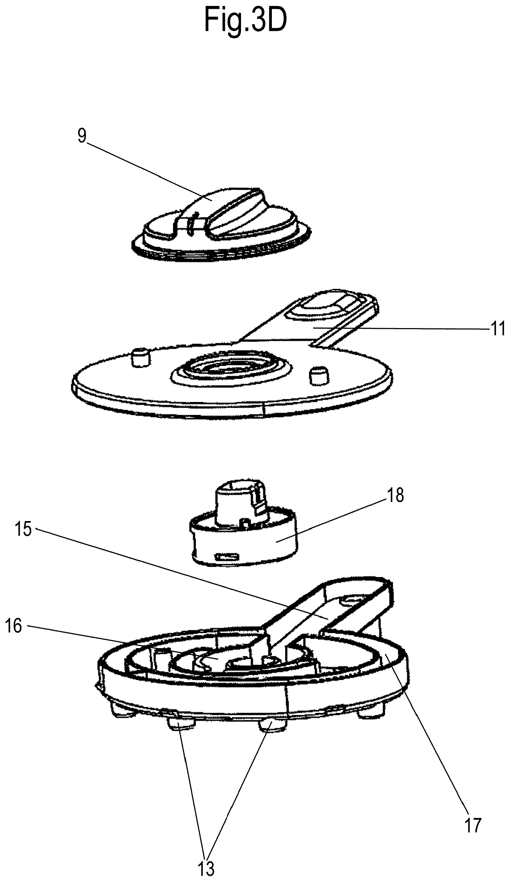

In den Figuren 3A bis 3D ist die Auslasseinrichtung 7 im Detail dargestellt. Die Auslasseinrichtung 7 umfasst einen Ausleger 11, an dem ein rohrförmiger Einlass 10 für heißes Wasser vorgesehen ist. Das heiße Wasser strömt von dem Einlass 10 über einen Kanal 15 innerhalb des Auslegers 11 zu Kanälen 16 und 17, um dann über Auslassöffnungen 12, 13 und 14 in das Filtergefäß 4 zu strömen. Dabei befindet sich eine zentrale Auslassöffnung 12 über einem mittleren Bereich eines darunter angeordneten befüllten Filterpapiereinsatzes, während äußere Auslassöffnungen 13, die auf einer kreisförmigen oder elliptischen Kreisbahn um die zentrale Auslassöffnung 12 angeordnet sind, oberhalb eines unteren oder mittleren Bereiches der Seitenwände des befüllten Filterpapiereinsatzes angeordnet sind. Hinsichtlich der Anordnung dieser äußeren Auslassöffnungen 13 wird auf die EP 1 287 772 B1 verwiesen, wobei abweichend auch eine kreisförmige Anordnung der äußeren Auslassöffnungen vorgesehen sein kann. An der Unterseite der Auslasseinrichtung 7 befinden sich zudem noch zwei mittlere Auslassöffnungen 14, die zusammen mit der zentralen Auslassöffnung 12 auf einer Linie liegen. Dabei befindet sich jeweils eine mittlere Auslassöffnung 14 auf gegenüberliegenden Seiten der mittleren Auslassöffnung 12. Die mittleren Auslassöffnungen 14 sind oberhalb einer Bodennaht oder Bodenfalte eines darunter angeordneten Filterpapiereinsatzes positioniert.

Über den Wahlschalter 9 kann die Zufuhr des heißen Wassers zu den Auslassöffnungen 12, 13 oder 14 gesteuert werden. Hierfür befindet sich in der Auslasseinrichtung ein äußerer Kanal 17, der die Zufuhr zu den äußeren Auslassöffnungen 13 ermöglicht. Neben dem äußeren Kanal 17 ist ein mittlerer Kanal 16 vorgesehen, der die Zufuhr zu der zentralen Auslassöffnung 12 und den mittleren Auslassöffnungen 14 steuert. Die zugeführte Wassermenge kann über den Wahlschalter 9 eingestellt werden, der auf ein Schaltelement 18 wirkt, das mit entsprechenden Wand- und Verschlusselementen ausgestattet ist, um die Wasserzufuhr zu den Kanälen 16 und 17 zu steuern.

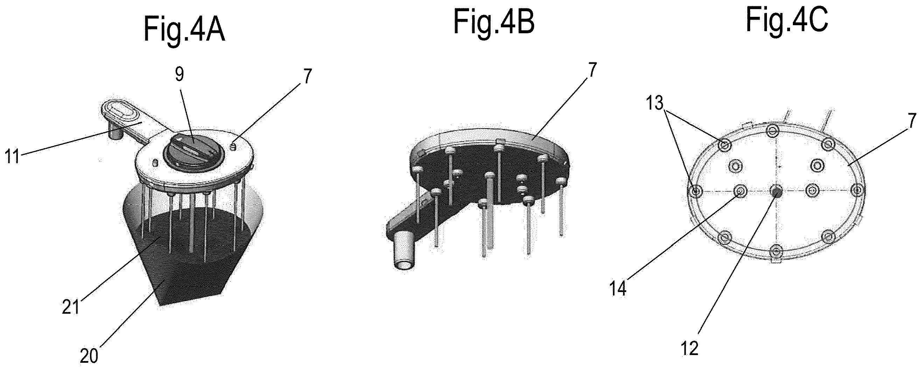

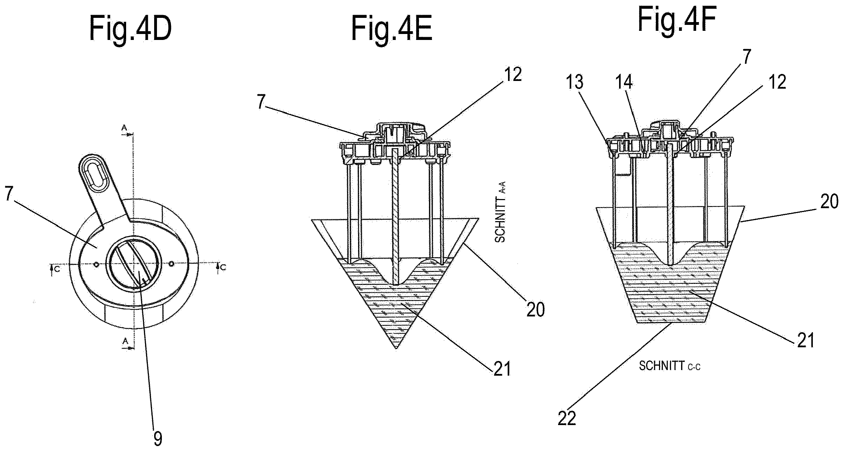

In den Figuren 4A bis 4F befindet sich der Wahlschalter 9 in der Brühposition "stark". In dieser Schaltposition strömt heißes Wasser über die Auslasseinrichtung 7, und vorrangig wird das heiße Wasserüber die zentrale Auslassöffnung 12 in einen Filterpapiereinsatz 20 eingeleitet, in dem Kaffeemehl 21 eingefüllt ist. Ein weiterer Teil des heißen Wassers fließt über die äußeren Auslassöffnungen 13, so dass das Kaffeemehl auch außen benetzt wird und eine zu hohe Bitterkeit des Kaffeegetränkes vermieden wird. Durch die im Wesentlichen mittige Einleitung des heißen Wassers in das Kaffeemehl 21 wird dieses im mittleren Bereich durchwirbelt und ein vergleichsweise starker Kaffee gebrüht. Das Extraktionsergebnis liegt oberhalb von 22 %.

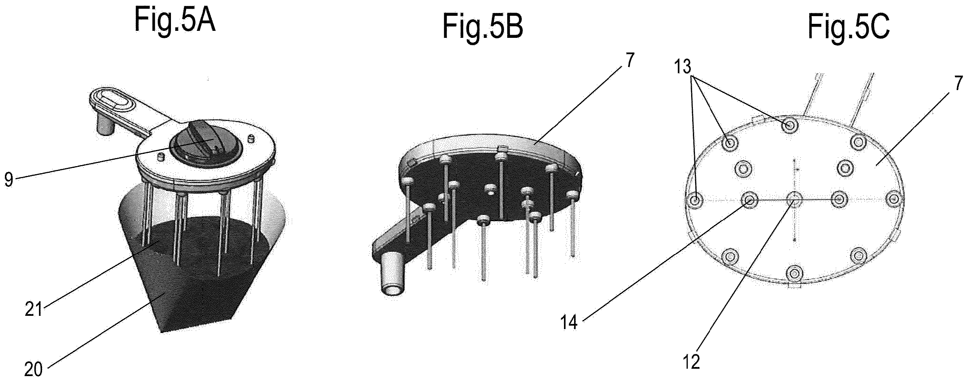

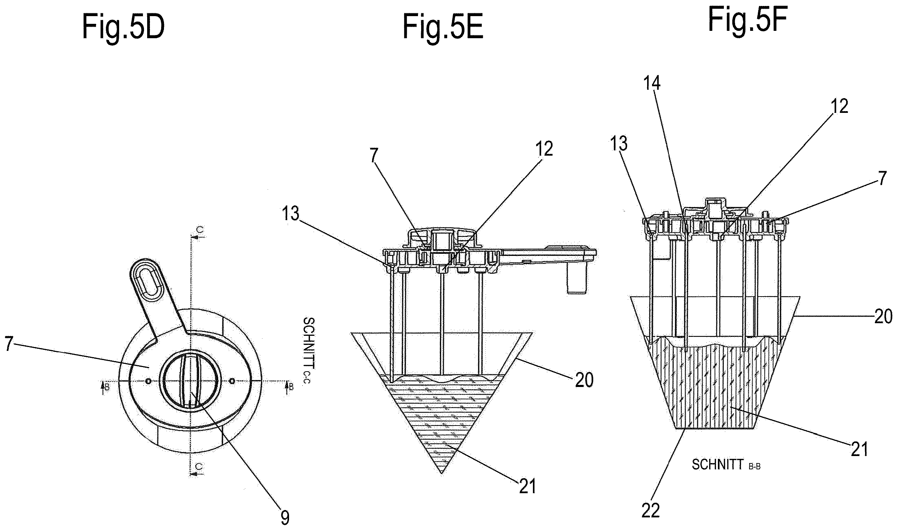

In den Figuren 5A bis 5F ist eine mittlere Einstellung des Wahlschalters 9 gezeigt. Durch die Veränderung des Wahlschalters 9 fließt das heiße Wasser nach wie vor durch die äußeren Öffnungen 13, aber statt durch die zentrale Auslassöffnung 12 nur noch über die beiden mittleren Auslassöffnungen 14. Diese Veränderung führt dazu, dass das Kaffeemehl noch gleichmäßiger benetzt wird und die Verwirbelung im zentralen mittleren Bereich des Kaffeemehls etwas geringer ausfällt. In den schematischen Ansichten der Figuren 5E und 5F ist das Kaffeemehl 21 mit einer im Wesentlichen geraden oberen Ebene dargestellt, während in den Figuren 4E und 4F eine mittlere Vertiefung durch den mittleren Wasserstrahl dargestellt ist.

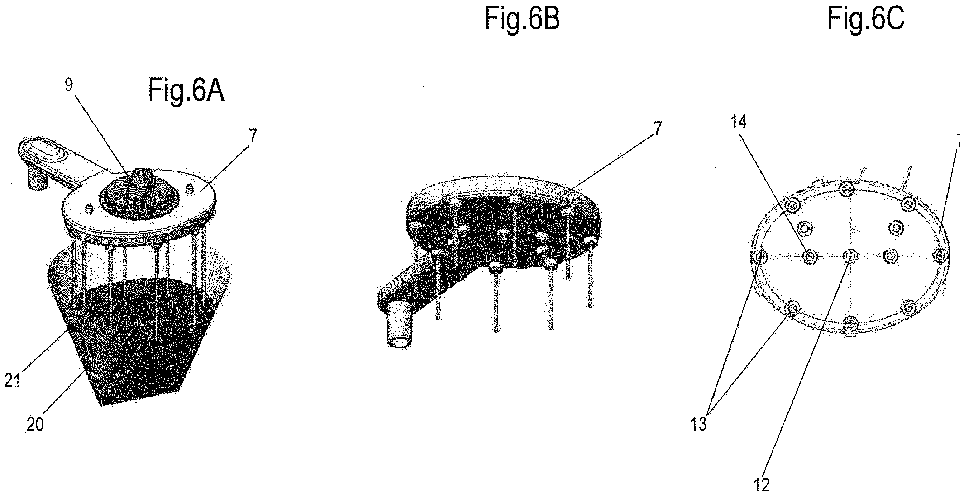

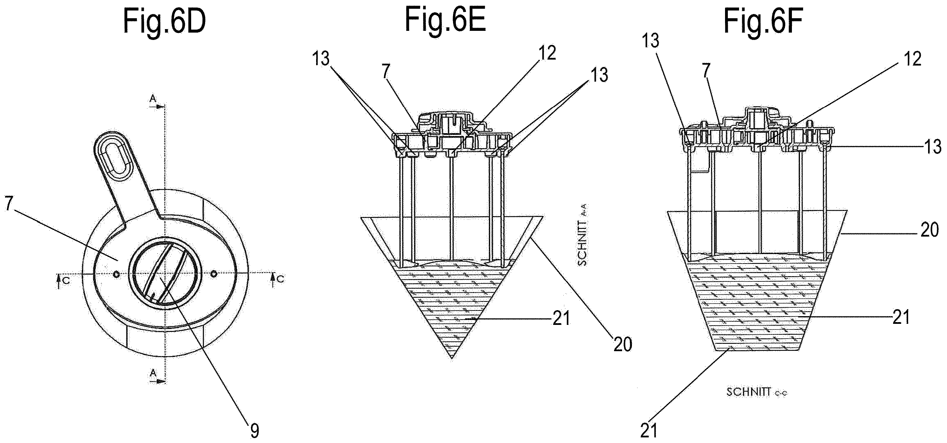

In den Figuren 6A bis 6F ist die Einstellung des Wahlschalters 9 auf "mild" eingestellt worden. In dieser Einstellung des Wahlschalters 9 strömt das heiße Wasser ausschließlich über die äußeren Öffnungen 13 in das Filtergefäß 4 mit dem Filterpapiereinsatz 20, so dass das Kaffeemehl 21 im Wesentlichen im äußeren Bereich benetzt wird, in dem die Füllhöhe des Kaffeemehls durch die schräg verlaufenden Seitenwände in vertikale Richtung geringer ist als in dem mittleren Bereich. Dadurch wird ein milderer Kaffee gebrüht, und der Extraktionsgrad ist geringer als bei den anderen Einstellungen des Wahlschalters 9, insbesondere geringer als 18 %.

Die oben beschriebene Auslasseirichtung 7 wurde Tests unterzogen, wobei verschiedene Sorten von Kaffeemehl für die Tests verwendet wurden. Bei dem Test mit dem unter dem Handelsnamen "Melitta Auslese" vertriebenen Kaffee wurde zunächst die Korngrößenverteilung und die mittlere Korngröße bestimmt, da diese einen Einfluss auf den Extraktionsgrad besitzen. Die ermittelte Korngrößenverteilung ergibt sich durch die nachfolgende Tabelle:

| Kornklasse (µm) | Korngrößenverteilung (%) | | | |
|---|---|---|---|---|
| | Melitta Auslese | Jacobs Krönung | Tchibo Feine Milde | Dallmayr Prodomo |
| < 63 | 7,0 | 9,6 | 7,9 | 5,2 |
| 63 - 125 | 8,6 | 8,0 | 8,5 | 7,6 |
| 125 - 250 | 9,7 | 8,8 | 9,4 | 10,7 |
| 250 - 400 | 18,6 | 16,8 | 24,9 | 25,5 |
| 400 - 500 | 19,0 | 18,3 | 28,7 | 19,7 |
| 500 - 1000 | 36,1 | 38,0 | 20,6 | 31,3 |
| > 1000 | 1,0 | 0,5 | 0,0 | 0,0 |
| mittlere Korngröße (µm) | 433 | 437 | 396 | 405 |

Der Großteil des Kaffeemehls besitzt eine Korngröße zwischen 125 bis 500 µm, wobei dies auch auf Produkte anderer Hersteller zutrifft. Daraus ergibt sich eine mittlere Korngröße von etwa 433 µm. Dieses Kaffeemehl wurde für die Tests zur Bestimmung des Extraktionsgrades verwendet. Dabei wurde das Kaffeemehl mit einer Dosierung vom 60 g/l in einen Filterpapiereinsatz 20 eingefüllt, und dann wurde der Extraktionsgrad abhängig von der Schaltstellung des Wahlschalters 9 gemessen.

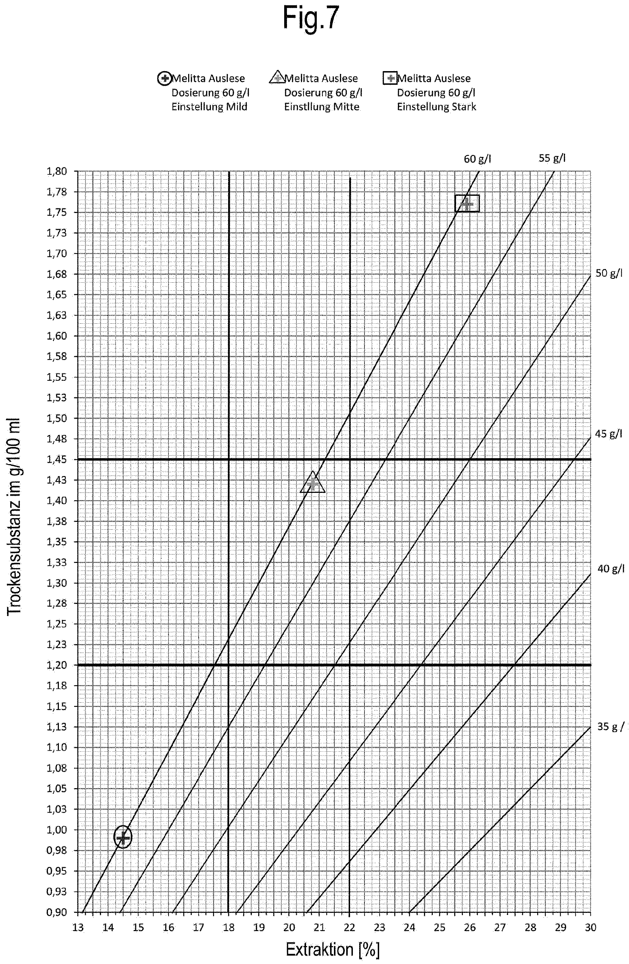

Wie in Figur 7 gezeigt ist, kann über die Einstellung des Wahlschalters 9 das Extraktionsergebnis beeinflusst werden. Die meisten Kaffeetrinker bevorzugen einen Extraktionsgrad zwischen 18 bis 22 %, was durch Einstellung des Wahlschalters auf die mittlere Position erreicht wird. Bei Einstellung auf die Position "stark" ist der Extraktionsgrad über 22 % und kann eine gewisse Bitterkeit entfalten, die jedoch erwünscht ist. Soll hingegen ein milderer Kaffee gebrüht werden, liegt der Extraktionsgrad unter 18 %. Durch Einstellung des Wahlschalters 9 kann somit ein reproduzierbarer Extraktionsgrad erhalten werden.

### Bezugszeichenliste

- 1: Kaffeemaschine
- 2: Gehäuse
- 3: Deckel
- 4: Filtergefäß
- 5: Kanne
- 6: Warmhalteplatte
- 7: Auslasseinrichtung
- 8: Öffnung
- 9: Wahlschalter
- 10: Einlass
- 11: Ausleger
- 12: Auslassöffnung
- 13: Auslassöffnung
- 14: Auslassöffnung
- 15: Kanal
- 16: Kanal
- 17: Kanal
- 18: Schaltelement
- 20: Filterpapiereinsatz
- 21: Kaffeemehl

## Patentansprüche

1. Kaffeemaschine (1), mit einer Vorrichtung zur Zuführung von heißem Wasser zu einer Auslasseinrichtung (7) oberhalb einem Filtergefäß (4), in das ein Filterpapiereinsatz mit Kaffeemehl einsetzbar ist, wobei die Auslasseinrichtung (7) eine zentrale Auslassöffnung (12) über einem mittleren Bereich des befüllten Filterpapiereinsatzes (20) und mehrere äußere Auslassöffnungen (13), die oberhalb eines mittleren Bereiches der Seitenwände des befüllten Filterpapiereinsatzes (20) angeordnet sind, aufweist, und die Durchflussmenge an heißem Wasser über die einzelnen Auslassöffnungen (12, 13, 14) über einen Wahlschalter (9) steuerbar ist, der mindestens drei Schaltstellungen zum Einstellen der Kaffeestärke aufweist, **dadurch gekennzeichnet, dass** in allen Schaltstellungen des Wahlschalters (9) das heiße Wasser zumindest teilweise über die äußeren Auslassöffnungen (13) des befüllten Filterpapiereinsatzes (20) zugeführt wird.

2. Kaffeemaschine nach Anspruch 1, **dadurch gekennzeichnet, dass** die Auslasseinrichtung (7) Kanäle (15, 16, 17) zum Leiten des heißen Wassers zu den Auslassöffnungen (12, 13, 14) aufweist und durch den Wahlschalter (9) die Durchflussmenge zu den einzelnen Auslassöffnungen (12, 13, 14) steuerbar ist.

3. Kaffeemaschine nach Anspruch 1 oder 2, **dadurch gekennzeichnet, dass** in einer Schaltstellung des Wahlschalters (9) auf "stark" sowohl die zentrale Auslassöffnung (12) als auch in geringem Maße die äußeren Auslassöffnungen (13) durchströmt werden.

4. Kaffeemaschine nach einem der vorhergehenden Ansprüche, **dadurch gekennzeichnet, dass** in einer Schaltstellung des Wahlschalters (9) auf "stark" der Extraktionsgrad bei einer mittleren Korngröße zwischen 350 µm bis 450 µm und einer Dosierung von 60 g Kaffeemehl pro Liter bei über 22 % liegt.

5. Kaffeemaschine nach einem der vorhergehenden Ansprüche, **dadurch gekennzeichnet, dass** in einer mittleren Schaltstellung des Wahlschalters (9) der Extraktionsgrad bei einer mittleren Korngröße des Kaffeemehls zwischen 350 µm bis 450 µm und einer Dosierung von 60 g Kaffeemehl pro Liter in einem Bereich zwischen 18 % bis 22 % liegt.

6. Kaffeemaschine nach einem der vorhergehenden Ansprüche, **dadurch gekennzeichnet, dass** die Auslasseinrichtung (7) oberhalb einer Bodennaht (22) oder Bodenfalte des Filterpapiereinsatzes (20) zusätzlich zu der zentralen Auslassöffnung (12) mindestens zwei weitere mittige Auslassöffnungen (14) aufweist.

7. Kaffeemaschine nach Anspruch 6, **dadurch gekennzeichnet, dass** in einer mittleren Schaltstellung des Wahlschalters (9) die mindestens zwei mittleren Auslassöffnungen (14) für eine gleichmäßige Benetzung des Kaffeemehls durchströmt werden.

8. Kaffeemaschine nach Anspruch 6 oder 7, **dadurch gekennzeichnet, dass** neben der zentralen Auslassöffnung (12) und den äußeren Auslassöffnungen (13) nur zwei mittlere Auslassöffnungen (14) vorgesehen sind, die auf gegenüberliegenden Seiten der zentralen Auslassöffnung (12) vorgesehen sind.

9. Kaffeemaschine nach einem der vorhergehenden Ansprüche, **dadurch gekennzeichnet, dass** bei einer Schaltstellung des Wahlschalters (9) auf "mild" der Extraktionsgrad bei einer mittleren Korngröße des Kaffeemehls zwischen 350 µm bis 450 µm und einer Dosierung von 60 g pro Liter unter 18 % liegt.

10. Kaffeemaschine nach einem der vorhergehenden Ansprüche, **dadurch gekennzeichnet, dass** in einer Schaltstellung des Wahlschalters (9) auf "mild" nur die äußeren Auslassöffnungen (13) durchströmt werden.

11. Verfahren zum Betreiben einer Kaffeemaschine (1) nach einem der vorhergehenden Ansprüche, wobei der Extraktionsgrad des Kaffeemehls durch die Stellung des Wahlschalters steuerbar ist.

## Claims

1. Coffee machine (1), comprising a device for supplying hot water to an outlet device (7) above a filter vessel (4) into which a filter-paper insert with ground coffee can be inserted, wherein the outlet device (7) has a central outlet opening (12) over a middle region of the filled filter-paper insert (20) and a plurality of outer outlet openings (13) arranged above a middle region of the side walls of the filled filter-paper insert (20), and the flow rate of hot water through the individual outlet openings (12, 13, 14) is controllable via a selector switch (9), which has at least three switching positions for adjusting the coffee strength, **characterized in that** in all switching positions of the selector switch (9) the hot water is at least partially supplied via the outer outlet openings (13) of the filled filter-paper insert (20).

2. Coffee machine according to claim 1, **characterized in that** the outlet device (7) comprises channels (15, 16, 17) for guiding the hot water to the outlet openings (12, 13, 14) and the flow rate to the individual outlet openings (12, 13, 14) is controllable by the selector switch (9).

3. Coffee machine according to claim 1 or 2, **characterized in that** in a switching position of the selector switch (9) to "strong", liquid flows through both the central outlet opening (12) and to a low extent the outer outlet openings (13).

4. Coffee machine according to one of the preceding claims, **characterized in that** in a switching position of the selector switch (9) to "strong", the degree of extraction is over 22% at an average grain size between 350 µm to 450 µm and a dosage of 60 g of ground coffee per liter.

5. Coffee machine according to one of the preceding claims, **characterized in that** in a middle switching position of the selector switch (9), the degree of extraction is in a range of between 18 % to 22% at an average grain size of the ground coffee between 350 µm to 450 µm and a dosage of 60 g of ground coffee per liter.

6. Coffee machine according to one of the preceding claims, **characterized in that** the outlet device (7) has at least two further middle outlet openings (14) above a bottom seam (22) or bottom fold of the filter-paper insert (20) in addition to the central outlet opening (12).

7. Coffee machine according to claim 6, **characterized in that** in a middle switching position of the selector switch (9), liquid flows through the at least two middle outlet openings (14) for a uniform wetting of the ground coffee.

8. Coffee machine according to claim 6 or 7, **characterized in that** in addition to the central outlet opening (12) and the outer outlet openings (13), only two middle outlet openings (14) are provided, which are provided on opposite sides of the central outlet opening (12).

9. Coffee machine according to one of the preceding claims, **characterized in that** at a switching position of the selector switch (9) to "mild", the degree of extraction lies below 18% at an average grain size of the ground coffee between 350 µm to 450 µm and a dosage of 60 g per liter.

10. Coffee machine according to one of the preceding claims, **characterized in that** in a switching position of the selector switch (9) to "mild", liquid only flows through the outer outlet openings (13).

11. Method for operating a coffee machine (1) according to one of the preceding claims, wherein the degree of extraction of the ground coffee is controllable by the position of the selector switch.

## Revendications

1. Machine à café (1) comportant un dispositif pour fournir de l'eau chaude à une installation de sortie (7) au-dessus d'un récipient à filtre (4) dans lequel se place un filtre en papier recevant du café en poudre, l'installation de sortie (7) ayant un orifice central de sortie (12) au-dessus de la zone centrale du filtre en papier (20) chargé et plusieurs orifices périphériques de sortie (13) au-dessus de la zone moyenne des parois latérales du filtre en papier (20), chargé, et le débit d'eau chaude des différents orifices de sortie (12, 13, 14) se commande par un sélecteur (9) qui a au moins trois positions de commutation pour régler la force du café,
machine à café **caractérisée en ce que**
dans toutes les positions de commutation du sélecteur (9), l'eau chaude arrive au moins en partie par les orifices périphériques de sortie (13) sur le filtre en papier (20), chargé.

2. Machine à café selon la revendication 1,
**caractérisée en ce que**
l'installation de sortie (7) a des canaux (15, 16, 17) pour conduire l'eau chaude vers les orifices de sortie (12, 13, 14) et le sélecteur (9) commande le débit vers les différents orifices de sortie (12, 13, 14).

3. Machine à café selon la revendication 1 ou 2,
**caractérisée en ce que**
dans une position de commutation du sélecteur (9) qui est la position "forte" à la fois l'orifice central de sortie (12) et aussi dans une moindre mesure, les orifices périphériques de sortie (13) sont passants.

4. Machine à café selon l'une des revendications précédentes, **caractérisée en ce que**
dans une position de commutation du sélecteur (9) sur "fort" le degré d'extraction pour une granulométrie moyenne comprise entre 350 µm et 450 µm et un dosage de 60 g de poudre de café par litre est supérieur à 22 %.

5. Machine à café selon l'une des revendications précédentes,
**caractérisée en ce que**
dans une position de commutation moyenne du sélecteur (9), le degré d'extraction pour une granulométrie moyenne de la poudre de café comprise entre 350 µm et 450 µm et un dosage de 60 g de poudre de café par litre, se situe dans une plage comprise entre 18 % et 22 %.

6. Machine à café selon l'une des revendications précédentes,
**caractérisée en ce que**
l'installation de sortie (7), au-dessus de la soudure du fond (22) ou le pli du fond du filtre en papier (20) comporte en plus de l'orifice central de sortie (12) au moins deux autres orifices médians de sortie (14).

7. Machine à café selon la revendication 6,
**caractérisée en ce que**
dans une position de commutation moyenne du sélecteur (9), au moins les deux orifices médians de sortie (14) sont passants pour assurer un mouillage régulier de la poudre de café.

8. Machine à café selon la revendication 6 ou 7,
**caractérisée en ce que**
à côté de l'orifice central de sortie (12) et des orifices périphériques de sortie (13) il n'y a que deux orifices médians de sortie (14) qui sont de part et d'autre de l'orifice central de sortie (12).

9. Machine à café selon l'une des revendications précédentes,
**caractérisée en ce que**
pour une position de commutation du sélecteur (9) sur "moyen", le degré d'extraction pour une granulométrie moyenne de la poudre de café comprise entre 350 µm et 450 µm et un dosage de 60 g par litre est inférieur de 18 %.

10. Machine à café selon l'une des revendications précédentes,
**caractérisée en ce que**
dans une position de commutation du sélecteur (9) sur "moyen" seuls les orifices périphériques de sortie (13) sont passants.

11. Procédé de fonctionnement d'une machine à café (1) selon l'une des revendications précédentes,
selon lequel
le degré d'extraction de la poudre de café se commande par la position du sélecteur.
